**Europäisches Patentamt**

**European Patent Office**

**Office européen des brevets**

(19)

(11) Publication number: **0 138 296**
A2

# (12) EUROPEAN PATENT APPLICATION

(21) Application number: **84304361.3**

(22) Date of filing: **27.06.84**

(51) Int. Cl.⁴: **B 29 C 71/00**

(30) Priority: **27.06.83 US 507920**

(43) Date of publication of application: **24.04.85**
**Bulletin 85/17**

(84) Designated Contracting States: **DE FR GB NL SE**

(71) Applicant: **RADIATION DYNAMICS INC., 316 South Service Road Melville, Long Island, New York 11746 (US)**

(72) Inventor: **Bradley, Richard, 172 Hyde Park Road, Yardley Pennsylvania 19067 (US)**

(74) Representative: **Hayward, Denis Edward Peter et al, Lloyd Wise, Tregear & Co. Norman House 105-109 Strand, London WC2R OAE (GB)**

(54) **Sleeve for protecting coupled components.**

(57) Apparatus and method for protectively covering coupled components, such as in a coaxial cable splice, with a sleeve wherein one of the covered components is damaged when subjected to excessive heat which is less than that required for heat recovery. A sealed bond is formed between a first length of the sleeve and a heat damageable component by heating and thereby foaming a foamable adhesive therebetween, the heat being insufficient to melt or otherwise damage the heat damageable component. A second length of the sleeve is heat shrunk into engagement with another of the coupled components which is not damageable at heat recovery temperatures. Initially, the second length has a cross-sectional dimension that is preferably larger than that of the first length, the second length being heat shrinkable to cover components of varying cross-sections. Sleeves according to the invention are formed by various techniques, including extruding or blow-molding a tube of heat recoverable material.

ACTORUM AG

## SLEEVE FOR PROTECTING COUPLED COMPONENTS

The present invention relates to a sleeve for protectively connecting, splicing, or covering coupled components - such as electrical wires connected together, a coaxial cable and a coaxial connector which are spliced together, pipes, or other couplable objects.

The connecting or splicing of electrical components with heat-recoverable sleeves has been taught in the past in United States Patent Nos. 3,163,692, 3,891,790, 3,975,039, and 4,151,364.

In United States Patent No. 3,163,692 insulation on a wire is expanded in diameter along one length and is slid longitudinally to place the expanded diameter length over a coupling member into which at least one wire is inserted. The insulation is then heat shrunk pressing inwardly to achieve tight coupling of the wire (or wires) in the coupling member.

United States Patent No. 3,891,790 teaches a heat recoverable tube for splicing an insulated wire. Interposed between the tube and the wire for a given length is a heat recoverable sleeve and adhesive between the sleeve and the wire. A propane torch or any other heat source capable of delivering about 250°F is used to heat recover the tube and heat the adhesive to achieve a bond. In operation, a heat recoverable tube surrounds a heat recoverable sleeve which, when recovered, causes an adhesive bend to flow out from the ends of the sleeve.

In United States Patent No. 3,975,039 a heat recoverable tube has adhesive applied thereto to effectuate pipe or conductor joining when the tube is shrunk therearound. Significantly, as in United States Patent No. 3,891,790, this patent specifies that the adhesive "melt and flow at temperatures to which the heat-recoverable member is heated to cause it to recover. The adhesive....crosslinks during recovery of the heat-recoverable member".

In United States Patent No. 4,151,364, an elongated connector tube has (a) two end sections each with a stretched, heat recoverable diameter and (b) a centre portion therebetween.  Extending along the interior of the centre portion is a hollow conductor member, the inner surface of which has adhesive applied thereto. In use, the end of a first wire is inserted into one end of the conductor member and the end of a second wire is inserted into the other end.  The centre portion is exposed to a "temperature" sufficient to cause recovery, e.g. approximately 250°F, "to thereby shrink the central portion into an engaging relationship with the conductive member and to thereby activate the adhesive" to form a hermetic bond.

In reviewing the prior patents, it is noted that various adhesives are disclosed for use with heat shrinkable sleeves or connectors.  In each instance, however, the adhesive is raised to the heat recovery temperature of 250°F to achieve bonding.  This consistent practice imposes a serious limitation in applications where an element to be coupled to another is subject to damage when excessive heat is applied thereto.  For example, coaxial cables comprising a centre conductor surrounded by foam insulation are damaged or destroyed by melting when subjected to large amounts of heat; that is, the centre conductor can float through the molten insulation and make contact with the outer metal conductor of the cable rendering the cable useless.

Moreover, although discussing the desirability of hermetic or sealed bonds, the prior technology does not disclose that the adhesive be of a type which foams to fill voids and achieve a sealed, waterproof bond.

Further, the prior technology does not teach a sleeve having a non-heat shrinkable first length which bonds to a heat sensitive first component by means of a

foamable adhesive which foams at a temperature which is lower than that at which the first component becomes damaged. In this regard, it is further not taught to activate the adhesive at a temperature lower than the temperature of heat recovery.

The absence of such features is not surprising when it is recognized that the prior technology does not address the problem of connecting a heat-damageable component to a less heat-sensitive component with a sleeve of material which is stretchable and thereafter heat recoverable.

It is thus an object of the invention to provide a sleeve which protectively covers a heat damageable component coupled to a component which is not heat damageable conveniently and without causing damage from excessive heating.

According to the present invention, there is provided an elongated sleeve for covering (a) a first component which is subject to damage when heat above a predefined threshold is applied thereto and (b) a second component coupled to the first component, the sleeve comprising:

a hollow first length for surrounding the second component, said second length being shrinkable into an engaging relationship with the second component in response to the application of heat thereto; and

an adhesive applied to the inner surface of said first length, said adhesive foaming when at least a defined minimum quantity of heat which is less than that which would damage the first component is applied to said adhesive;

the adhesive forming a sealed bond between the inner surface of said first length and the outer surface of the first component when (a) said first length surrounds the first component and (b) at least said defined minimum quantity of heat is applied to said adhesive.

It is a further object to protectively cover a coaxial cable coupled to a coaxial connector, the cable being damageable at heat recovery temperatures.

The invention thus also provides a sleeve for protectively covering a cable subject to damage when exposed to heat required for heat shrinking, and a connector which receives the cable, the sleeve comprising:

a hollow non-heat shrinkable first length and a hollow heat shrinkable second length extending from said first length (a) said second length being stretched to have a larger diameter than said first length and (b) said first length being disposed about the cable and said second length being disposed about the connector; and

foamable adhesive applied to the inner surface of the first length, said foamable adhesive being characterized in that it foams to form a sealed bond between the first length and the cable with the application thereto of less heat than is provided to damage the cable.

A standard hot melt adhesive is optionally included along the inner surface of the second length to enhance bonding. In a specific preferred embodiment, the sleeve serves as a protective covering for a cable television splice. A rip strip may be provided to longitudinally slit open the sleeve.

The invention further provides a method of protecting an electrical cable coupled to a connector, wherein the electrical cable is subject to damage when heat above a prescribed threshold is applied thereto, the method comprising the steps of:

forming a hollow cylindrical sleeve having (a) a non-heat shrinkable first length and (b) a second length which (i) shrinks inwardly when heat is applied thereto and (ii) extends from the first length;

applying a foamable adhesive to the inner surface of the first length;

placing the sleeve over the cable and connector, the first length being disposed around the cable and the second length being disposed around the connector;

heat shrinking the second length to engage the connector; and

applying heat to the first length which is (a) sufficient to cause the adhesive to foam and form a sealed bond between the first length and the cable and (b) insufficient to cause damage to the cable surrounded thereby.

Arrangements according to the invention will now be described in more detail and with reference to the accompanying drawings, in which:-

Figure I is a front cutaway view of a sleeve according to the invention.

Figure II is a cutaway perspective view of the sleeve of the invention covering several components.

Figure III is an illustration of a blow-mold apparatus that can be used in forming a sleeve according to the invention.

Figure IV is an illustration of a product of blow-molding formable into a sleeve according to the invention.

In Figure I, a sleeve 100 is shown having a hollow first length 102 and a hollow second length 104 integrally extending therefrom. The first length 102 is non-heat shrinkable and therefore has a diameter which is substantially constant regardless of whether heat is applied thereto. The second length 104 is heat-shrinkable. Accordingly, the cross-sectional dimensions of the second length 104 can vary when the temperature thereof is raised to a heat recovery temperature of approximately 250°F. That is, the second length 104 can be shrunk to tightly engage any of various shaped and dimensioned components surrounded thereby.

Along the inner surface of the first length 102 is a foamable adhesive coating 106. The foamable adhesive coating 106 extends the length of the first length 102. The foamable adhesive coating 106 can extend over only a portion of the first length 102, however superior results are achieved when the foamable adhesive coating 106 is coextensive with the first length 102 as shown in Figure I.

Also included along the sleeve 100 is a rip strip 108. Pulling the rip strip 108 results in forming a slit or longitudinal separation along the sleeve 100.

The sleeve 100 can be used to cover any element or elements where one component thereof is subject to damage when excessive heat is applied thereto. The damageable component is surrounded by the first length 102 and a sealed bond therebetween is formed by applying heat to the foamable adhesive coating 106. The foamable adhesive coating 106 may be the commercially available foamable adhesive Foamcoat A7891X1 produced by Pierce and Stevens of Buffalo, N.Y. In any case, the foamable adhesive coating 106 is synthesized to foam at temperatures well below the damage temperature of the component surrounded by the first length 102.

A specific embodiment of the invention is shown in Figure II. A sleeve 200 according to the invention is shown in preparation for deployment. The sleeve 200 has a first length 202, a second length 204, a foamable adhesive coating 206 along the inner surface of the first length 202, and a rip strip 208 as in Figure I. In addition, a hot melt adhesive 210 coats the inner surface of the second length 204. The hot melt adhesive 210 is an element which may be required depending on the use of the sleeve 200.

The sleeve 200 is shown surrounding two components 212 and 214. Component 212 is a coax cable which includes a centre conductor 216, an outer conductor 218, and foam insulation 220 interposed between the centre conductor 216 and the outer conductor 218. The foam insulation 220 melts at a threshold temperature, the threshold temperature being significantly lower than the typical heat recovery temperature of 250°F. Accordingly, if heat recovery temperatures were applied to the first length 202 and the foamable adhesive 206 therein, the foam insulation 220 would melt and the centre conductor would be permitted to float within the molten foam. If the centre conductor 216 makes contact with the outer conductor 218, the cable 212 loses its utility.

Because the foamable adhesive coating 216 melts and foams at a temperature lower than the damage temperature of the foam insulation 220, adherence between the outer surface of the outer conductor 218 and the inner surface of the first length 202 can be achieved without damage to the coaxial cable 212.

The cable 212 in the preferred embodiment is a cable television coaxial cable. As is customary with such cables, splicing is often required. In such instances, the cable 212 is inserted into one end of a connector which is component 214 in Figure II. A second cable (not shown) may be similarly inserted into the other end of the connector component 214 and may also be covered by a sleeve such as sleeve 200, the two sleeves being either separate or integrally coupled if desired.

In operation, the second length 204 is heat shrunk to tightly engage the connector 214. The hot melt adhesive 210 melts to effect adhesion upon cooling when heat recovery temperatures are removed. The first length 202 and foamable adhesive coating 208 are mildly heated to sufficiently foam the coating 208 but not to melt the insulation 220.

To gain re-entry to the cable 212 or the connector component 214, the rip strip 208 is employed to tear a slit in the sleeve 200.

The rip strip 208 may be a conventional strip as used in other wire or cable jackets. Similarly, the hot melt adhesive 210 is any appropriate commercial, known adhesive and the material of the sleeve 200 may be of any of various commercially available materials which can be stretched and heat shrinkable.

In forming the sleeve 200, several methods may be employed. According to a first method, an extruded tube of heat recoverable material is expanded diametrically outward, a first length of which being recovered.

In a second method, a blow mold apparatus 300 is used as shown in Figure III. A tube 302 of heat recoverable material has a closed end 304 and an open end 306. The apparatus 300 moves together as shown by the arrows, an upper first length 310 of the tube 302 abutting the closed apparatus 300. A lower second length 313 is smaller in diameter than the apparatus 300. The tube 302 is heated and gas, such as air, nitrogen, or pressurized steam, is blown into the open end 306 of the tube 302. The second length 312 expands and the open end collapses.

To open the ends and to define the longitudinal length of the elongated sleeve resulting from the blow molding, end portions are cut off each end of the tube 302. This is shown in Figure IV, the dashed lines representing the cuts.

In examining the embodiments, it is noted that the first length 202 and second length 204 are shown to be circular in cross-section. Also, the second length 204 is shown to have a larger cross-sectional dimension, e.g., diameter, than the first length 202. While typical, these features are not required to practice the invention. Further, the methods of forming the sleeve are by way of example and are not all inclusive.

0138296

Still further, it is noted that although the preferred embodiment pertains to a coaxial cable for a cable television there are also other environments for the sleeve. That is, the sleeve may be used generally to cover two coupled components wherein one component is subject to damage by excessive heat, only that length of the sleeve surrounding the other component being shrunk by heat.

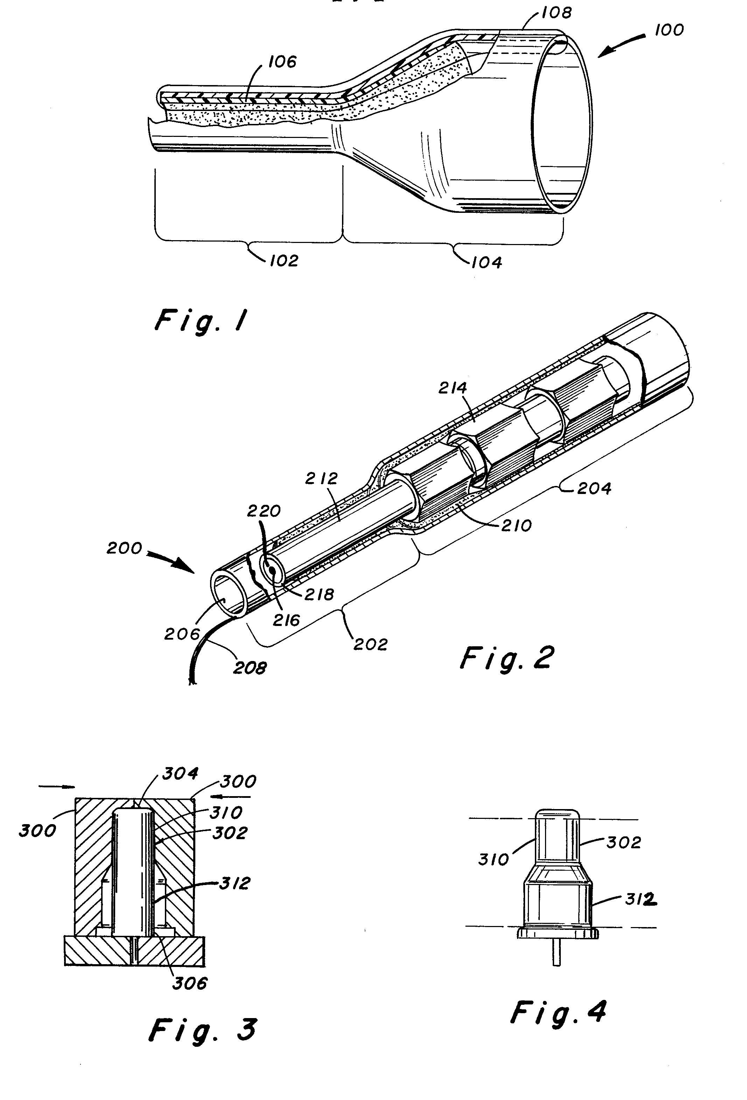

CLAIMS:

1. An elongated sleeve for covering (a) a first component which is subject to damage when heat above a predefined threshold is applied thereto and (b) a second component coupled to the first component, the sleeve comprising:

a hollow first length for surrounding the first component, said first length being non-heat shrinkable;

a hollow second length for surrounding the second component, said second length being shrinkable into an engaging relationship with the second component in response to the application of heat thereto; and

an adhesive applied to the inner surface of said first length, said adhesive foaming when at least a defined minimum quantity of heat which is less than that which would damage the first component is applied to said adhesive;

the adhesive forming a sealed bond between the inner surface of said first length and the outer surface of the first component when (a) said first length surrounds the first component and (b) at least said defined minimum quantity of heat is applied to said adhesive.

2. A sleeve as claimed in Claim 1, wherein said second length is characterized in that the heat required to shrink said second length into engagement with the second component substantially exceeds the predefined threshold.

3. A sleeve as claimed in Claim 2, further comprising:

means for adhering said second length to the second component when said second length is shrunk into engagement with the second component.

4. A sleeve as claimed in Claim 2, wherein the first component and the second component are integrally joined at a junction plane, and

wherein said first length extends in one longitudinal direction from the junction plane when surrounding the second component.

5.      A sleeve as claimed in Claim 4, wherein the first component is foam insulated coaxial cable; said adhesive which coats the inner surface of said first length being characterized in that it foams and forms said sealed bond when less heat is applied to said adhesive than is sufficient to damage the foam insulated coaxial cable.

6.      A sleeve as claimed in Claim 2, wherein said second length is characterized in that said second length is variably heat shrinkable to permit engagement with a second component of any cross-sectional dimension within a range defined by the potential shrinkage of said second length.

7.      A sleeve as claimed in Claim 5, wherein said second length is characterized in that said second length is variably heat shrinkable to permit engagement with a second component of any cross-sectional dimension within a range defined by the potential shrinkage of said second length.

8.      A sleeve as claimed in Claim 3, further comprising: a removable rip strip extending at least substantially longitudinally for a distance along the sleeve, the removal of said strip forming a slit separation along the sleeve which permits access to at least one of the surrounded components.

9.      A sleeve as claimed in Claim 1, wherein said first length and said second length are each (a) symmetrical about a common longitudinal axis and (b) tubular is shape.

10.     A method of protecting an electrical cable coupled to a connector, wherein the electrical cable is subject to damage when heat above a prescribed threshold is applied thereto, the method comprising the steps of: forming a hollow cylindrical sleeve having (a) a non-heat shrinkable first length and (b) a second length which (i) shrinks inwardly when heat is applied thereto and (ii) extends from the first length;

applying a foamable adhesive to the inner surface of the first length;

placing the sleeve over the cable and connector, the first length being disposed around the cable and the second length being disposed around the connector;

heat shrinking the second length to engage the connector; and

applying heat to the first length which is (a) sufficient to cause the adhesive to foam and form a sealed bond between the first length and the cable and (b)  insufficient to cause damage to the cable surrounded thereby.

11.   A method as claimed in Claim 10, wherein the sleeve forming step comprising the steps of;

stretching a tube of heat recoverable material; and heat recovering a portion of the stretched tube;

the recovered portion representing the first length of the sleeve and the unrecovered portion representing the second length of the sleeve.

12.   A method as claimed in Claim 10, wherein the sleeve forming step comprises the steps of:

fabricating a vessel of heat shrinkable material to have (a) one open end, (b) one closed end and (c) a substantially constant diameter between the two ends;

placing the fabricated vessel into a blow mold which is dimensioned to (a) maintain a first length of the vessel at the substantially constant diameter and (b) permit expansion of the diameter along a second length of the vessel;

heating the vessel in the blow mold; and

blowing gas into the heated vessel to cause expansion of the vessel diameter outward along the second length.

13.   A method as claimed in Claim 12, wherein the sleeve forming step comprises the further step of:

forming a fixed length for the sleeve, comprising the step of cutting off a portion of the vessel at each end after gas is blown therein.

14. A method as claimed in Claim 12, wherein the vessel is substantially closed at each end thereof after the heating and blowing steps, the method comprising the further step of:

cutting off a portion of the vessel at each end to provide a respective opening at each end.

15. A method as claimed in Claim 10, comprising the further step of:

applying a thermally reactive adhesive to the inner surface of the second length before the second length is heat shrunk, the second length thereby adhering to the connector when said second length is heat shrunk to engage the connector.

16. A sleeve for protectively covering a cable subject to damage when exposed to heat required for heat shrinking, and a connector which receives the cable, the sleeve comprising:

a hollow non-heat shrinkable first length and a hollow heat shrinkable second length extending from said first length (a) said second length being stretched to have a larger diameter than said first length and (b) said first length being disposed about the cable and said second length being disposed about the connector; and

foamable adhesive applied to the inner surface of the first length, said foamable adhesive being characterized in that it foams to form a sealed bond between the first length and the cable with the application thereto of less heat than is provided to damage the cable.

0138296

Fig. 1

Fig. 2

Fig. 3

Fig. 4